# EUROPÄISCHE PATENTSCHRIFT

(11) **EP 4 281 390 B1**
(45) Veröffentlichungstag und Bekanntmachung des Hinweises auf die Patenterteilung: **10.12.2025**
(21) Anmeldenummer: 22701254.9
(22) Anmeldetag: 20.01.2022
(51) Int. Cl.: B65G 1/04

(54) **MANIPULATOR, SOWIE LAGER MIT MANIPULATOR**
MANIPULATOR AND STORAGE FACILITY WITH MANIPULATOR
MANIPULATEUR ET INSTALLATION DE STOCKAGE MUNIE D'UN MANIPULATEUR

(30) Priorität: 21.01.2021 DE 102021101200
(43) Veröffentlichungstag der Anmeldung: 29.11.2023
(73) Patentinhaber: Gebr. Willach GmbH, 53809 Ruppichteroth (DE)
(72) Erfinder: WILLACH, Jens, 53783 Eitorf (DE); MÜLLER, Hans-Friedrich, 53809 Ruppichteroth (DE)
(74) Vertreter: dompatent
(86) Internationale Anmeldenummer: PCT/EP2022/051272
(87) Internationale Veröffentlichungsnummer: WO 2022/157262

(56) Entgegenhaltungen:
- WO-A1-2016/168874
- DE-A1- 102011 010 557
- ES-T3- 2 357 180
- US-A1- 2015 081 089
- US-A1- 2019 287 250

## Beschreibung

Die vorliegende Erfindung betrifft einen Manipulator für ein Lager mit Lagerflächen, auf denen Gegenstände in einer Reihe anordenbar sind sowie ein Lager mit mindestens einem Manipulator und Lagerflächen, auf denen Gegenstände in einer Reihe anordenbar sind.

Es ist bekannt, dass Lagerflächen, wie beispielsweise Kanallager mit Lagerkanälen, über einen Manipulator befüllt werden. Dabei wird das Eingabeende der Lagerfläche von dem Manipulator angefahren und die Gegenstände werden an die Lagerplätze übergeben. Derartige Lager werden häufig für Waren eingesetzt. Besonders geeignet für schnelldrehende Waren sind Schrägfachbodenregale, bei denen die einzelnen Waren in Kanälen, die durch seitliche Begrenzungen getrennt sind, auf einer Schrägfläche enthalten sind. Bei einer Entnahme eines unteren Gegenstandes rutschen die übrigen Gegenstände nach. In der Regel sind in jedem Kanal gleichartige Gegenstände enthalten. Die Gegenstände weisen generell quaderförmige Packungen auf, wobei Packungen gleichen Formats in einen Kanal eingebracht werden, dessen Kanalbreite auf die Packungsgröße abgestimmt ist. Auf derartigen Lagerflächen können jedoch auch Waren unterschiedlicher Formen, z.B. Zylinder, und unterschiedlichen Formats innerhalb desselben Kanals gespeichert werden.

Ferner sind Lager mit horizontalen Lagerflächen bekannt, die auch Regallager genannt werden. Der Manipulator eines derartigen Lagers weist eine Greifvorrichtung auf, die ausfährt, um einen Gegenstand auf einer Lagerfläche abzulegen oder von dieser aufzunehmen.

Zum Einlagern in das Lager nimmt der Manipulator die Gegenstände an einer Übergabestation auf, an der die Gegenstände automatisch oder manuell von einem Bediener auf die Tragfläche des Manipulators verbracht werden. Dazu dient zumeist eine Einfüllfläche, von der die Gegenstände auf die Tragfläche des Manipulators rutschen oder von der der Manipulator die Gegenstände mittels der Greifvorrichtung aufnimmt.

Die vorbekannten Lager sind beispielsweise Lagerautomaten, wie sie in Apotheken eingesetzt werden, um Medikamentenpackungen zu lagern.

Aus EP 2 165 950 A1 ist ein derartiger Lagerautomat bekannt. Der Manipulator weist eine Greifvorrichtung mit einem Greifer mit zwei Klemmbacken auf. Die Klemmbacken sind an einem Rahmen befestigt und werden zur Aufnahme eines Gegenstands mit dem Rahmen in Richtung des Gegenstands verschoben, bis der Gegenstand zwischen den Klemmbacken angeordnet ist. Anschließend werden die Klemmbacken zueinander verfahren bis sie an dem Gegenstand anliegen. Durch ein Verschwenken der Klemmbacken in der horizontalen Ebene wird eine Greifbewegung ausgeführt und der Gegenstand zwischen den Klemmbacken geklemmt. Die Antriebe für die einzelnen Bewegungen sind alle an dem Rahmen angeordnet, sodass bei der Bewegung des Rahmens die Antriebe mitgeführt werden und somit ein relativ großes Gewicht bewegt werden muss. Dadurch muss zumindest ein Teil der Antriebe relativ leistungsstark ausgebildet sein. Aufgrund des hohen, zu bewegenden Gewichts ist darüber hinaus die Genauigkeit der Bewegung des Rahmens und somit der Klemmbacken vergleichsweise gering oder es muss ein erhöhter konstruktiver Aufwand betrieben werden, um eine hohe Genauigkeit zu erreichen. Der Rahmen muss zum Tragen der Antriebe relativ stabil ausgestaltet sein, wodurch das Eigengewicht des Rahmens weiter erhöht ist. Aus WO 2016/168874 A1 geht ein Manipulator mit den Merkmalen des Oberbegriffs von Anspruch 1 hervor. US 2015/081089 A1 beschreibt einen weiteren Manipulator mit teleskopisch ausfahrbaren Klemmbacken. Ein weiterer Manipulator ist aus DE 10 2011 010557 A1 bekannt.

Es ist daher die Aufgabe der vorliegenden Erfindung, einen Manipulator für ein Lager mit Lagerflächen zum Lagern von Gegenständen zu schaffen, bei dem die Greifvorrichtung einen hinsichtlich des Gewichts verbesserten Aufbau aufweist, sowie ein Lager mit einem derartigen Manipulator.

Der erfindungsgemäße Manipulator ist definiert durch die Merkmale des Anspruchs 1.

Das erfindungsgemäße Lager ist definiert durch die Merkmale des Anspruchs 14.

Der erfindungsgemäße Manipulator für ein Lager mit mindestens einer Lagerfläche, auf der Gegenstände in einer Reihe anordenbar sind, wobei über den Manipulator eine Bedienseite der Lagerfläche bedienbar ist, weist die Merkmale des Anspruchs 1 auf.

Die Erfindung sieht somit vor, dass lediglich die Klemmbacken in die zweite horizontale Richtung auf die Lagerfläche zu oder von dieser weg bewegt werden, so dass die Antriebsvorrichtung und die Antriebsübertragungseinrichtung für diese Bewegung stationär verbleiben können. Dadurch kann das zu bewegende Gewicht sehr geringgehalten werden. Da die zwei Antriebsübertragungseinrichtungen direkt an die Klemmbacken angreifen, kann die Antriebsbewegung direkt auf die Klemmbacken übertragen werden, so dass der vorrichtungstechnische Aufwand geringgehalten werden kann. Da die Klemmbacken einzeln in die zweite horizontale Richtung angetrieben werden und somit nur ein geringes Gewicht bewegt werden muss, kann der entsprechende Antrieb für diese Bewegung mit vergleichsweise geringer Leistung ausgelegt werden.

Mittels des erfindungsgemäßen Manipulators können die Gegenstände auf der Lagerfläche eines Lagers entweder aus Blick des Manipulators auf der Lagerfläche in horizontaler Richtung nebeneinander in einer Reihe oder auch aus Blick des Manipulators hintereinander in einer Reihe angeordnet werden. Mittels der Klemmbacken können beispielsweise auch mehrere Gegenstände, beispielsweise Gegenstände von gleicher Größe, gleichzeitig gegriffen bzw. transportiert werden.

Zum Bedienen der Lagerfläche wird der Tragschlitten eines erfindungsgemäßen Manipulators an die Bedienseite der Lagefläche herangefahren. Dazu ist zumindest der Tragschlitten des Manipulators in mindestens zwei Raumrichtungen verfahrbar und vorzugsweise zusätzlich um eine vertikale Achse verschwenkbar Zum Entnehmen eines Gegenstands von der Lagerfläche werden die Klemmbacken in die zweite horizontale Richtung angetrieben, bis sie sich oberhalb der Lagerfläche auf beiden Seiten des Gegenstands befinden. Anschließend werden die Klemmbacken in die erste horizontale Richtung aufeinander zu bewegt, um den Gegenstand zu greifen. Anschließend werden die Klemmbacken in die zweite horizontale Richtung von der Lagerfläche wegbewegt, so dass sie den Gegenstand auf die Tragfläche des Tragschlittens ziehen. In Ihrer Grundposition entspricht die zweite horizontale Richtung der Längsrichtung der Klemmbacken.

Vorzugsweise ist vorgesehen, dass die Antriebseinrichtungen aufeinander zu oder voneinander weg bewegbar sind, wodurch die Antriebsübertragungseinrichtungen die Klemmbacken in die erste horizontale Richtung bewegen. Mit anderen Worten, die Bewegung der Klemmbacken in die erste horizontale Richtung wird ebenfalls über die Antriebsübertragungseinrichtungen hervorgerufen, so dass diese zusammen mit den Klemmbacken die entsprechende Bewegung ausführen.

Im Rahmen der Erfindung ist insbesondere vorgesehen, dass die erste horizontale Richtung orthogonal zu der zweiten horizontalen Richtung verläuft.

Dadurch, dass die Antriebsübertragungseinrichtungen die Bewegung in die erste horizontale Richtung hervorrufen, kann ebenfalls erreicht werden, dass bei dieser Bewegung kein Antriebsmotor mitbewegt werden muss, so dass dieser beispielsweise stationär verbleiben kann und lediglich die Antriebsübertragungseinrichtungen antreibt.

Gemäß der Erfindung ist vorgesehen, dass die Antriebsübertragungseinrichtungen jeweils eine Halterung aufweisen, an der jeweils eine der Klemmbacken translatorisch verschiebbar gelagert ist, wobei die Halterungen in einer horizontalen Ebene verschwenkbar sind und wobei über die Verschwenkbewegung ein Winkel zwischen den Klemmbacken veränderbar ist. Neben der Bewegung in die erste und die zweite horizontale Richtung können somit die Klemmbacken auch zueinander verschwenkt werden, wodurch eine Greifbewegung hervorgerufen werden kann. Beispielsweise können über diese Verschwenkbewegung die distalen Enden der Klemmbacken pinzettenartig aufeinander zu bewegt werden, so dass beim Angreifen an einen Gegenstand lediglich eine kleine Fläche am Ende der Klemmbacken an dem Gegenstand anliegt und eine vorteilhafte Presskraft auf den Gegenstand ausgeübt wird. Dadurch kann der Gegenstand stabil mittels der Klemmbacken transportiert werden.

Durch die translatorisch verschiebbare Lagerung der Klemmbacken an der Halterung, können die Klemmbacken in vorteilhafterweise in die zweite horizontale Richtung bewegt werden. Die Lagerung der Klemmbacken an der Halterung wird bei dem Verschwenken der Halterungen in der horizontalen Ebene mitbewegt, so dass die Klemmbacken auch in einer verschwenkten Position weiterhin in ihrer Längsrichtung bewegbar sind. Durch die erfindungsgemäße Konstruktion der Halterungen mit daran gelagerten Klemmbacken, wobei die Halterungen verschwenkt werden, kann die Verschwenkbewegung der Klemmbacken auf konstruktiv einfache Art und Weise ermöglicht werden, wobei jede Antriebsübertragungseinrichtung die entsprechende Haltung und somit die Klemmbacke einzeln antreibt. Dadurch muss für die Verschwenkbewegung lediglich ein geringes Gewicht, nämlich das Gewicht der Halterung und der Klemmbacke bewegt werden, so dass der für die Verschwenkbewegung notwendige Antrieb mit geringer Leistung ausgestattet sein kann.

Im Rahmen der Erfindung werden die Klemmbacken jeweils einzeln in die verschiedenen Richtungen angetrieben. Dies bedeutet jedoch nicht, dass die Bewegungen der Klemmbacken beispielsweise nacheinander erfolgen, sondern durch eine entsprechende Steuerung erfolgt die Bewegung der Klemmbacken meist synchron zueinander.

Vorzugsweise ist vorgesehen, dass die Antriebsvorrichtung einen ersten Antriebsmotor aufweist, der die Antriebsübertragungseinrichtung aufeinander zu oder voneinander weg antreibt. Mit anderen Worten, der erste Antriebsmotor treibt die Klemmbacken mittels der Antriebsübertragungseinrichtungen in die erste horizontale Richtung an.

Dabei kann vorgesehen sein, dass die Antriebsübertragungseinrichtungen jeweils auf oder an einer Gewindespindel angeordnet sind, wobei der erste Antriebsmotors die Gewindespindel rotatorisch antreibt, wodurch die jeweilige Antriebsübertragungseinrichtung entlang der entsprechenden Gewindespindel bewegbar ist. Durch die Gewindespindeln lassen sich die Antriebsübertragungseinrichtungen in vorteilhafterweise aufeinander zu oder voneinander wegbewegen, wobei auf einfache Art und Weise eine synchrone Bewegung der Antriebsübertragungseinrichtungen durch eine entsprechende Ausgestaltung der Gewindespindeln erreicht werden kann.

Vorzugsweise ist dabei vorgesehen, dass die Gewindespindeln gegenläufig antreibbar sind, wobei der erste Antriebsmotor eine der Gewindespindeln rotatorisch antreibt und diese Gewindespindel die Antriebsbewegung auf die andere der Gewindespindeln überträgt. Auf diese Weise kann auf konstruktiv einfache Art und Weise ein gegenläufiger Antrieb erreicht werden, in dem beispielsweise mittels zweier Zahnräder die Antriebsbewegung von einer Gewindespindel auf die andere Gewindespindel übertragen wird. Ferner kann auf einfache Art und Weise erreicht werden, dass die Gewindespindeln mit gleicher Rotationsgeschwindigkeit (nur entgegengesetzt) bewegt werden, indem beispielsweise zur Übertragung der Antriebsbewegung Zahnräder mit identischen Durchmessern verwendet werden.

In einer bevorzugten Ausführungsform der Erfindung ist vorgesehen, dass die Antriebsvorrichtung einen zweiten Antriebsmotor aufweist, der mittels der Antriebsübertragungseinrichtung die Klemmbacken in die zweite horizontale Richtung antreibt. Es kann somit vorgesehen sein, dass die Klemmbacken für den Antrieb in die zweite horizontale Richtung einen gemeinsamen Antriebsmotor aufweisen, der die Antriebsbewegung der Klemmbacken hervorruft. Durch das Vorsehen eines gemeinsamen zweiten Antriebsmotors kann eine synchrone Bewegung der Klemmbacken in die zweite horizontale Richtung auf besonders einfache Art und Weise bereitgestellt werden. Die Antriebsübertragungseinrichtungen können beispielsweise mittels entsprechender Getriebe die Antriebsbewegung auf die Klemmbacken übertragen.

Vorzugsweise ist vorgesehen, dass die Klemmbacken jeweils eine Zahnstange und die Antriebsübertragungseinrichtungen jeweils ein Ritzel aufweisen, wobei das Ritzel einer Übertragungseinrichtung in die Zahnstange der entsprechenden Klemmbacke eingreift und die Antriebsbewegung des zweiten Antriebsmotors über das Ritzel auf die jeweilige Klemmbacke übertragbar ist. Auf diese Weise kann die translatorische Verschiebung der Klemmbacke auf besonders einfache Art und Weise erfolgen. Die Zahnstange kann beispielsweise an der Ober- oder Unterseite der Klemmbacke angeordnet sein.

Dabei ist vorzugsweise vorgesehen, dass die Antriebsvorrichtung eine Antriebswelle aufweist, wobei die Antriebsübertragungseinrichtungen auf der Antriebswelle translatorisch in Längsrichtung der Antriebswelle beweglich gelagert sind, wobei die Antriebswelle von dem zweiten Antriebsmotor rotatorisch angetrieben ist und die Antriebswelle die Antriebsbewegung des zweiten Antriebsmotors auf das Ritzel überträgt. Erfindungsgemäß ist somit vorgesehen, dass die Antriebswelle der Antriebsvorrichtung eine Doppelfunktion ausfüllt, nämlich einerseits die Lagerung der Antriebsübertragungseinrichtungen, so dass diese in der Längsrichtung der Antriebswelle beweglich gelagert sind und andererseits die Übertragung der Antriebsbewegung von dem zweiten Antriebsmotor zu dem Ritzel. Durch die translatorische Lagerung der Antriebsübertragungseinrichtungen auf der Antriebswelle kann in vorteilhafter Weise die Bewegung der Antriebsübertragungseinrichtungen aufeinander zu oder voneinander weg, die beispielsweise durch die Gewindespindeln hervorgerufen wird, ausgeführt werden. Gleichzeitig können die Gewindespindeln entlastet werden, da ein Großteil des Gewichts der Antriebsübertragungseinrichtungen von der Antriebswelle getragen wird. Selbstverständlich ist es auch möglich, dass die Antriebsübertragungseinrichtungen mittels einer separaten Lagereinrichtung an dem Tragschlitten gelagert sind und somit unabhängig von der Antriebswelle.

Vorzugsweise ist vorgesehen, dass die Antriebsübertragungseinrichtungen jeweils einen Zahnriementrieb aufweisen, der die rotatorische Antriebsbewegung der Antriebswelle auf das jeweilige Ritzel überträgt. Mittels des Zahnriementriebs kann die rotatorische Antriebsbewegung der Antriebswelle auf einfache Art und Weise auf ein Ritzel übertragen werden. Darüber hinaus bietet der Zahnriementrieb eine gewisse Elastizität, so dass auch bei stillstehender Antriebswelle das Ritzel in einem kleinen Winkelbereich um seine Rotationsachse verdrehbar ist und somit ein gewisses Spiel hat. Dieses Spiel ist von Vorteil, wenn eine der Klemmbacken mittels der Halterung verschwenkt wird, da dann ein leichtes Verkanten zwischen dem Ritzel und der Zahnstange, in die das Ritzel eingreift, erfolgt. Durch das Spiel, das der Zahnriemenbetrieb bereitstellt, kann das Ritzel eine kleine Drehbewegung um die Ritzelachse ausführen, die das Verkanten vereinfacht. Zusätzlich können die Zahnung von Ritzel und Zahnstange derart einander angepasst sein, dass die Verzahnung ein Spiel für das Verkanten aufweist.

Die Zahnstange kann beispielsweise aus einem Kunststoff bestehen. Das Ritzel kann ebenfalls aus einem Kunststoff oder aus Metall, beispielsweise Messing, bestehen. Durch die entsprechende Werkstoffwahl kann ein Verschleiß an Zahnstange und/oder Ritzel, insbesondere auf Grund der Verkantung während der Verschwenkbewegung der Klemmbacken, geringgehalten werden.

Im Rahmen der Erfindung bedeutet die Übertragung einer Antriebsbewegung, beispielsweise von einem der Antriebsmotoren auf die Klemmbacke, nicht notwendigerweise, dass eine direkte Übertragung der Bewegung stattfindet, sondern die Bewegung kann auch indirekt mittels dazwischen liegender Glieder erfolgen.

In einer bevorzugten Ausführungsform der Erfindung ist vorgesehen, dass die Antriebsübertragungseinrichtungen jeweils eine Arretiervorrichtung aufweisen, die die jeweilige Halterung in einer Grundposition hält, wobei die Antriebsübertragungseinrichtungen jeweils eine Federvorrichtung aufweisen, die in der Grundposition der Halterungen eine Vorspannkraft mit einer zu der jeweils anderen Klemmbacke gerichteten Kraftkomponente auf die jeweilige Klemmbacke ausüben, wobei die Arretiervorrichtung über eine Auslösevorrichtung lösbar ist, so dass die Federvorrichtung mittels der Vorspannkraft die Halterung verschwenkt. Mit anderen Worten, der Antrieb der Halterung aus der Grundposition in eine verschwenkte Position erfolgt mittels der Vorspannkraft der entsprechenden Federvorrichtung. Um die Halterungen in der Grundposition zu halten, ist die Arretiervorrichtung vorgesehen, die somit auch verhindert, dass die Vorspannkraft der Federvorrichtung ungewollt die entsprechende Halterung und somit die Klemmbacke verschwenkt.

Dabei kann vorgesehen sein, dass die Auslösevorrichtung ein Elektromagnet ist. Mittels des Elektromagneten lässt sich die Arretiervorrichtung in vorteilhafterweise und sehr schnell lösen. Darüber hinaus kann mittels des Elektromagnets mit einem geringen Energieeinsatz die Auslösung der Arretiervorrichtung vorgenommen werden, indem beispielsweise der Elektromagnet lediglich kurz unter Strom gesetzt wird, um einen Rückhalter der Auslösevorrichtung mittels Magnetkraft zu bewegen. Wenn die Arretiervorrichtung gelöst ist, wird die Halterung mittels der Federvorrichtung bewegt, so dass bereits kurz nach dem Auslösen der Elektromagnet ausgeschaltet werden kann. Um den Rückhalter in seine Ausgangsposition zu bewegen, kann die Auslösevorrichtung beispielsweise eine Feder aufweisen.

Bei dem erfindungsgemäßen Manipulator kann vorgesehen sein, dass durch eine Bewegung der Antriebsübertragungseinrichtungen aufeinander zu die Klemmbacken in einem verschwenkten Zustand der Halterungen gegen einen Gegenstand oder gegeneinander drückbar sind, wodurch die Federvorrichtung vorspannbar ist und die Halterungen in die Grundpositionen bewegbar sind. Durch das Drücken der Klemmbacken gegen einen Gegenstand oder gegeneinander können somit die Klemmbacken entgegen der Vorspannkraft der Federvorrichtung in ihre Grundposition bewegt werden. Dabei kann vorgesehen sein, dass die Arretiervorrichtung beim Erreichen der Grundposition einschnappt, um die Halterung in der Grundposition zu halten. Bei der Auslegung des erfindungsgemäßen Manipulators ist die Vorspannkraft der Feder derart zu wählen, dass ein zu transportierender Gegenstand in vorteilhafterweise bei verschwenkten Klemmbacken zwischen den Klemmbacken gehalten werden kann ohne dass beim Transport des Gegenstands die Klemmbacken entgegen der Federkraft der Federvorrichtung in Richtung der Grundposition bis zum Arretieren verschwenkt werden. Die vollständige Rückführung der Klemmbacken in die Grundposition erfolgt erst durch das Aufbringen einer weiteren Kraft mittels der Antriebsübertragungseinrichtungen. Beim Entnehmen eines Gegenstands können beispielsweise die Abmessungen des Gegenstands bekannt sein, so dass der Abstand der Klemmbacken mittels der Antriebsübertragungseinrichtungen an die Abmessung des Gegenstands angepasst ist. Die Klemmbacken werden dann anschließend in die zweite horizontale Richtung bewegt, bis sich der Gegenstand zwischen den Klemmbacken befindet. Durch ein Lösen der Arretiervorrichtung wird dann eine Greifbewegung der Klemmbacken ausgeführt, wobei der Gegenstand zwischen den Klemmbacken eingeklemmt wird. Die Klemmkraft wird durch die Federvorrichtung bereitgestellt. Die Gegenstände können mit relativ geringem Abstand zueinander auf der Lagerfläche gelagert werden. Dies kann dadurch erreicht werden, dass die Klemmbacken mit relativ geringem Abstand zu dem zu entnehmenden Gegenstand ausgefahren werden, wobei für die Greifbewegung nur ein geringer Platzbedarf besteht. Mittels des erfindungsgemäßen Manipulators lassen sich somit Lagerflächen mit hoher Platzausnutzung bestücken.

Durch das Vorsehen einer Antriebsübertragungseinrichtung mit einer Federvorrichtung und einer Arretiervorrichtung, über die die Halterung und somit die Klemmbacke verschwenkt werden kann, kann darüber hinaus auf einen separaten Antriebsmotor für die Verschwenkbewegung der Klemmbacke verzichtet werden, da die notwendige Antriebsenergie mittels des ersten Antriebsmotors bereitgestellt und in der Federvorrichtung zwischengespeichert werden kann. Der erste Antriebsmotor bewegt die Antriebsübertragungseinrichtungen aufeinander zu und durch ein Drücken der Klemmbacken gegen einen Gegenstand oder gegeneinander wird die Antriebskraft auf die Federvorrichtung übertragen und nach Erreichen der Grundposition und mit Arretierung in Form der Vorspannkraft zwischengespeichert.

Vorzugsweise ist vorgesehen, dass zwischen den Klemmbacken ein Schieber angeordnet ist, der in die zweite horizontale Richtung verschiebbar ist. Mittels des Schiebers können auf der Tragfläche des Tragschlittens angeordnete Gegenstände in die zweite horizontale Richtung verschoben werden. Zum Ablegen eines oder mehrerer Gegenstände auf einer Lagerfläche werden die Klemmbacken in einem an die Abmessung des bzw. der abzulegenden Gegenstände angepassten Abstand zueinander in die zweite horizontale Richtung verschoben, bis sich die distalen Enden oberhalb der entsprechenden Lagerfläche befinden. Anschließend wird bzw. werden der bzw. die Gegenstände mittels des Schiebers in die zweite horizontale Richtung verschoben und auf die Lagerfläche geschoben, wobei die Klemmbacken ein seitliche Führung für die Gegenstände bilden.

Vorzugsweise ist vorgesehen, dass neben den Klemmbacken, beispielsweise an den Halterungen, jeweils ein Sensor angeordnet ist, wobei einer der Sensoren die eingezogene Endposition einer der Klemmbacken ermittelt und der andere Sensor die ausgefahrene Endposition der anderen Klemmbacke ermittelt. Selbstverständlich können auch neben den Klemmbacken jeweils zwei Sensoren angeordnet sein, die jeweils die eingezogene Endposition und die ausgefahrene Endposition ermitteln. Bei synchron angetriebenen Klemmbacken ist jedoch jeweils ein Sensor ausreichend, da sich an der einen Klemmbacke der eingezogene Zustand ermitteln lässt, woraus sich schließen lässt, dass die andere Klemmbacke auf Grund der Synchronbewegung ebenfalls in der Endposition ist, und an der anderen Klemmbacke der ausgefahrene Zustand sensierbar ist. Die Sensoren können beispielsweise optische Sensoren sein, die eine Aussparung in der entsprechenden Klemmbacke ermitteln.

Bei dem erfindungsgemäßen Manipulator ist insbesondere eine sehr flache Ausgestaltung des Tragschlittens möglich, da dieser beispielsweise eine geringe Anzahl von Antriebsmotoren aufnehmen und mitführen muss, die darüber hinaus auch nur eine vergleichsweise geringe Leistung bereitstellen müssen.

Die Erfindung betrifft ferner ein Lager mit mehreren horizontal angeordneten Lagerflächen, die jeweils mindestens eine Bedienseite aufweisen und mit mindestens einem erfindungsgemäßen Manipulator.

Im Folgenden wird unter Bezugnahme auf die nachfolgenden Figuren die Erfindung näher erläutert.

Es zeigen:
- Fig. 1: eine schematische Perspektivdarstellung eines erfindungsgemäßen Lagers mit Lagerflächen und Manipulator,
- Fig, 2: eine schematische Perspektivdarstellung des Tragschlittens eines der erfindungsgemäßen Manipulatoren,
- Fig, 3: eine schematische Darstellung des Tragschlittens der Figur 2 ohne Gehäuse,
- Fig. 4: eine schematische Detaildarstellung der Spindeln zum Antrieb der Antriebsübertragungseinrichtungen des erfindungsgemäßen Manipulators,
- Fig. 5: eine schematische Detaildarstellung der Antriebswelle zur Übertragung der Antriebsbewegung auf die Ritzel zum Antrieb der Klemmbacken,
- Fign. 6a und 6b: schematische Darstellungen der Verschwenkbewegung der Halterungen und somit der Klemmbacken und
- Fig. 7: eine schematische Detaildarstellung der Antriebsübertragungseinrichtungen mit Federvorrichtung und Arretiervorrichtung.

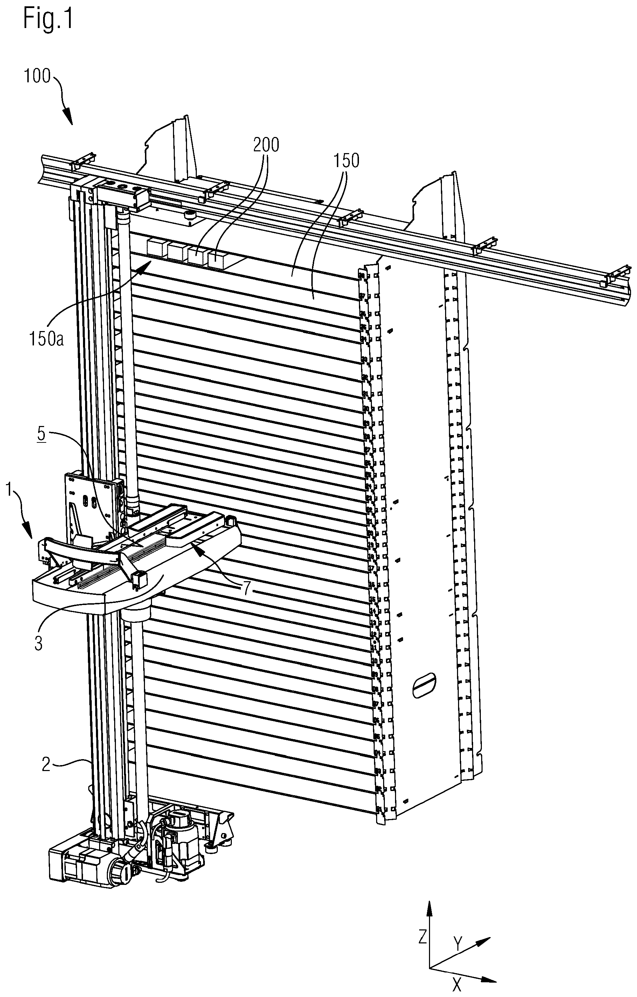

In Figur 1 ist ein Ausschnitt eines erfindungsgemäßen Lagers 100 schematisch in einer Perspektivdarstellung gezeigt.

Das Lager 100, beispielsweise ein Apothekenlager, weist einen Manipulator 1 und mehrere horizontal angeordnete Lagerflächen 150 auf. Auf den Lagerflächen 150 können Gegenstände 200, beispielsweise Medizinpackungen in einer Reihe gelagert werden.

Der Manipulator 1 weist einen Tragschlitten 3 auf, der an einem verfahrbaren Gestell 2 angeordnet ist. Mittels des verfahrbaren Gestells 2 kann der Tragschlitten 3 in mindestens zwei Raumrichtungen bewegt sowie um eine vertikale Achse verschwenkt werden. Das Gestell 2 kann parallel zu einer Bedienseite 150a der Lagerflächen 150 bewegt werden. In Figur 1 ist diese Richtung als x-Richtung bezeichnet. Ferner kann der Tragschlitten 3 in der Höhe verstellt werden, um die unterschiedlichen Lagerflächen 150 zu erreichen. Diese Richtung ist in Figur 1 die z-Richtung. Um eine sich in z-Richtung, d.h. vertikal, erstreckende Achse kann das der Tragschlitten 3 verschwenkt werden, um beispielsweise weitere Lagerflächen zu bedienen oder eine Ausgabestelle für die Gegenstände 200 zu erreichen.

Mittels des Tragschlittens 3 des Manipulators 1 können die einzelnen Lagerflächen 150 an der Bedienseite 150a bedient werden. Der Tragschlitten 3 weist eine Tragfläche 5 auf, auf der ein oder mehr Gegenstände 200 zum Transportieren abgelegt sein können. Mittels des Tragschlittens 3 können auf der Tragfläche 5 abgelegte Gegenstände 200 auf die Lagerflächen 150 befördert und auf diesen abgelegt werden oder es können Gegenstände 200 von der Lagerfläche entnommen und auf der Tragfläche 5 abgelegt werden. Zum Entnehmen, Ablegen bzw. Befördern der Gegenstände 200 weist der Tragschlitten 3 eine Greifvorrichtung 7 auf.

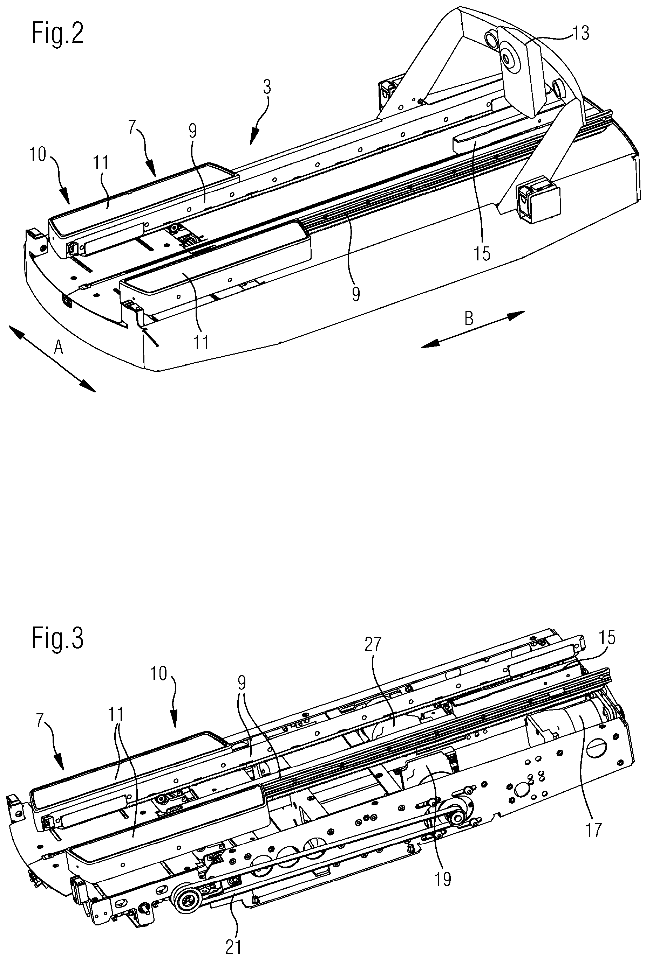

In den Figuren 2 und 3 ist der Tragschlitten 3 eines erfindungsgemäßen Manipulators 1 schematisch in einer Perspektivdarstellung mit und ohne Gehäuse dargestellt. Die nachfolgend verwendeten Richtungsangaben beziehen sich auf die in der Figur 1 dargestellte Stellung des Manipulators, d.h., dass er zur Bedienung der Bedienseite 150a der Lagerflächen 150 ausgerichtet ist.

Die Greifvorrichtung 7 weist zwei langgestreckte Klemmbacken 9 und eine Antriebsvorrichtung 10 zum Antrieb der Klemmbacken 9 auf. Die Klemmbacken 9 sind jeweils an einer Antriebsübertragungseinrichtung 11 translatorisch bewegbar gelagert. Mittels der Antriebsübertragungseinrichtungen 11 können die Klemmbacken 9 in verschiedene horizontale Richtungen bewegt werden. Die Antriebsübertragungseinrichtungen 11 können in eine erste horizontale Richtung A aufeinander zu und voneinander wegbewegt werden, wodurch die Klemmbacken 9 ebenfalls aufeinander zu und voneinander weg bewegbar sind. Die erste horizontale Richtung A entspricht der x-Richtung der Figur 1. Durch die Bewegung der Klemmbacken in die erste horizontale Richtung A kann der Abstand der Klemmbacken an einen Gegenstand 200 angepasst werden, so dass dieser in vorteilhafterweise gegriffen werden kann.

Ferner können mittels der Antriebsübertragungseinrichtungen 11 die Klemmbacken 9 in eine zweite horizontale Richtung B bewegt werden. Die zweite horizontale Richtung B ist in einer Grundposition der Klemmbacken 9, die in Figur 2 dargestellt ist, die Längsrichtung der Klemmbacken 9, so dass die Klemmbacken 9 auf die Lagerflächen 150 zu und von diesen weg bewegbar sind. Die zweite horizontale Richtung B entspricht der y-Richtung der Figur 1.

Jeweils eine Antriebsübertragungseinrichtung 11 greift an einer der Klemmbacken 9 an, so dass diese von der entsprechenden Antriebsübertragungseinrichtung 11 einzeln in die erste und zweite horizontale Richtung A, B angetrieben werden. Insbesondere bei der Bewegung der Klemmbacken 9 in die zweite horizontale Richtung B hat eine derartige Ausgestaltung den Vorteil, dass ausschließlich die Klemmbacken bewegt werden und nicht, wie im Stand der Technik, für die Bewegung der Klemmbacken in aufwändiger Weise Halterungen und Antriebe der Klemmbacken mit bewegt werden.

Oberhalb der Tragfläche 5 ist eine Kamera 13 angeordnet, die ein Bild eines Teils der Tragfläche 5, der Klemmbacken 9 und den Bereich vor dem Tragschlitten 3 aufnimmt, um den Transport von Gegenständen 200 bildlich erfassen zu können.

Im Bereich der Tragfläche 5 ist ferner ein Schieber 15 angeordnet, der in die zweite horizontale Richtung B verschiebbar ist und beispielsweise einen auf der Tragfläche 5 angeordneten Gegenstand auf der Tragfläche 5 verschieben kann, um diesen in vorteilhafterweise zwischen den Klemmbacken 9 anzuordnen oder auch einen Ablegevorgang durch Schieben eines Gegenstandes 200 unterstützen kann.

Wie aus Figur 3 ersichtlich ist, wird der Schieber 15 durch einen Schiebeantrieb 17 in Form eines Antriebsmotors angetrieben.

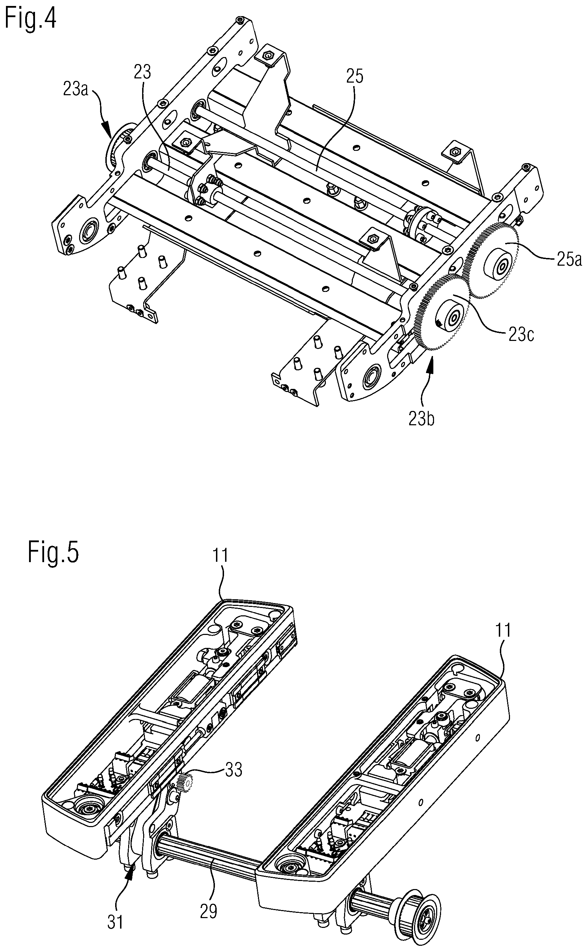

Der Tragschlitten 3 weist ferner einen ersten Antriebsmotor 19 auf, der die Antriebsübertragungseinrichtungen 11 in die erste horizontale Richtung antreibt. Die rotatorische Antriebsbewegung des ersten Antriebsmotors 19 wird über einen Riementrieb 21 auf einen Antriebsmechanismus für die Antriebsübertragungseinrichtungen 11 übertragen, der in Figur 4 (gegenüber Figur 3 um 180° gedreht) dargestellt ist.

Die Antriebsbewegung wird auf eine erste Gewindespindel 23 übertragen, die mit einer der Antriebsübertragungseinrichtungen 11 verbunden ist. Durch die rotatorische Bewegung der ersten Gewindespindel 23 wird die entsprechende Antriebsübertragungseinrichtung 11 in die erste horizontale Richtung A bewegt. An dem von einer Antriebsseite 23a, an der der Riementrieb 21 angreift, abgewandten Ende 23b der ersten Gewindespindel 23, weist die erste Gewindespindel 23 ein erstes Zahnrad 23c auf, das mit einem Zahnrad 25a einer zweiten Gewindespindel 25 zusammenwirkt. Die Rotationsbewegung der ersten Gewindespindel 23 wird somit auf die zweite Gewindespindel 25 übertragen und wodurch eine gegenläufige Bewegung entsteht. An der zweiten Gewindespindel 25 ist die andere Antriebsübertragungseinrichtung 11 angeordnet. Über die rotatorische Bewegung der zweiten Gewindespindel 25 wird die andere Antriebsübertragungseinrichtung 11 in die erste horizontale Richtung A bewegt.

Durch die erfindungsgemäße Ausgestaltung der Antriebsvorrichtung 10, bei der lediglich die Antriebsübertragungseinrichtungen 11 und über diese die Klemmbacken 9 angetrieben werden, kann der erste Antriebsmotor 19 bei der Bewegung der Klemmbacken 9 stationär in dem Tragschlitten 3 verbleiben. Dadurch, dass lediglich die Antriebsübertragungseinrichtungen 11 und die Klemmbacken 9 durch den ersten Antriebsmotor 19 bewegt werden müssen, ist für diese Bewegung nur eine relativ geringe Leistung notwendig, so dass der Antriebsmotor 19 entsprechend klein ausgelegt werden kann.

Die Antriebsvorrichtung 10 weist ferner einen zweiten Antriebsmotor 27 auf, der eine Antriebswelle 29, die am besten in Figur 5 ersichtlich ist, rotatorisch antreibt. Die Übertragung der Bewegung von dem Antriebsmotor 27 auf die Antriebswelle 29 erfolgt über einen nicht dargestellten Riementrieb. Auf der Antriebswelle 29 sind die Antriebsübertragungseinrichtungen 11 translatorisch beweglich gelagert. Somit werden die erste und zweite Getriebespindel 23, 25 entlastet und ein Großteil des Gewichts der Antriebsübertragungseinrichtungen 11 und der Klemmbacken 9 wird von der Antriebswelle 29 getragen. Die Antriebsübertragungseinrichtungen 11 sind in Längsrichtung der Antriebswelle 29 translatorisch gelagert, so dass eine Lagerung für die Bewegung der Antriebsübertragungseinrichtungen 11 in die erste horizontale Richtung A erfolgt.

Die Antriebswelle 29 überträgt die rotatorische Antriebsbewegung des zweiten Antriebsmotors 27 auf einen Zahnriementrieb 31, der die Antriebsbewegung auf ein Ritzel 33 überträgt. Das Ritzel 33 greift in eine an der entsprechenden Klemmbacke 9 angeordneten, nicht dargestellten Zahnstange ein. Die Rotationsbewegung des Ritzels 33 wird somit in eine Längsbewegung der Klemmbacke 9 umgewandelt, so dass die Klemmbacke 9 in die zweite horizontale Richtung B bewegbar ist.

Durch die erfindungsgemäße Konstruktion der Antriebsvorrichtung 10, wobei der die Antriebsbewegung des zweiten Antriebsmotors 27 über die Antriebswelle 29 den Zahnriementrieb 31 auf das Ritzel 33 übertragen wird, kann erreicht werden, dass für die Bewegung der Klemmbacken 9 in die zweite horizontale Richtung B lediglich die Klemmbacken 9 bewegt werden, so dass bei dieser Bewegung der zweite Antriebsmotor 27 stationär in dem Tragschlitten 3 verbleiben kann. Dadurch ist nur eine relativ geringe Leistung für die Bewegung der Klemmbacken 9 erforderlich, so dass der zweite Antriebsmotor 27 entsprechend klein ausgestaltet sein kann.

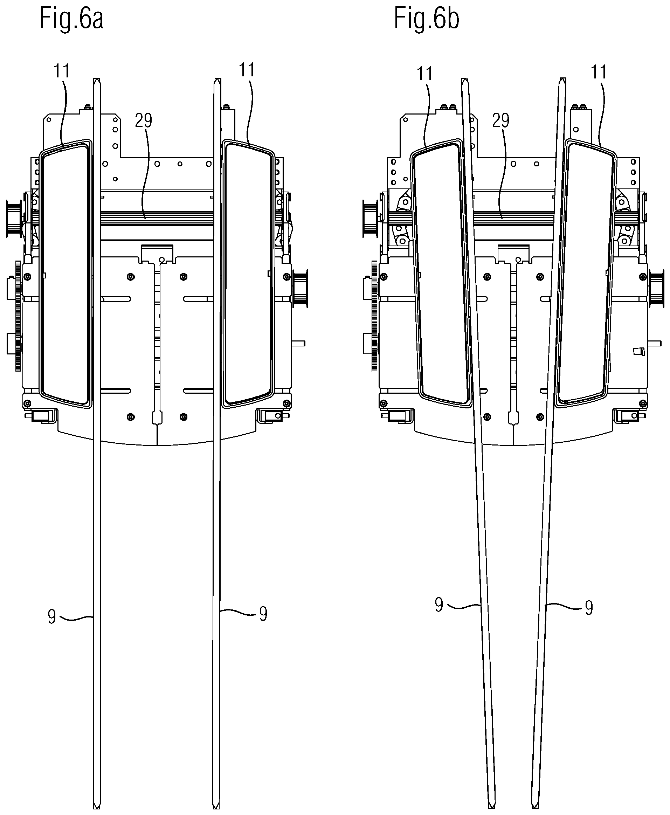

Wie aus den Figuren 6a und 6b hervorgeht, können die Klemmbacken 9 in einer horizontalen Ebene zueinander verschwenkt werden. Dazu werden die Antriebsübertragungseinrichtungen 11 in der horizontalen Ebene verschwenkt, so dass die Klemmbacken 9 mittels der Antriebsübertragungseinrichtungen 11 aus einer Grundposition, in der die Klemmbacken 9 parallel zueinander sind (in Figur 6a dargestellt) in eine verschwenkte Position (in Figur 6b dargestellt), verschwenkt werden können.

Durch das Verschwenken der Klemmbacken in der horizontalen Ebene und die dadurch hervorgerufene Winkelveränderung können die distalen Enden der Klemmbacken 9 eine pinzettenartige Greifbewegung ausführen, wodurch ein Gegenstand 200 in vorteilhafterweise mittels der Klemmbacken 9 gegriffen werden kann.

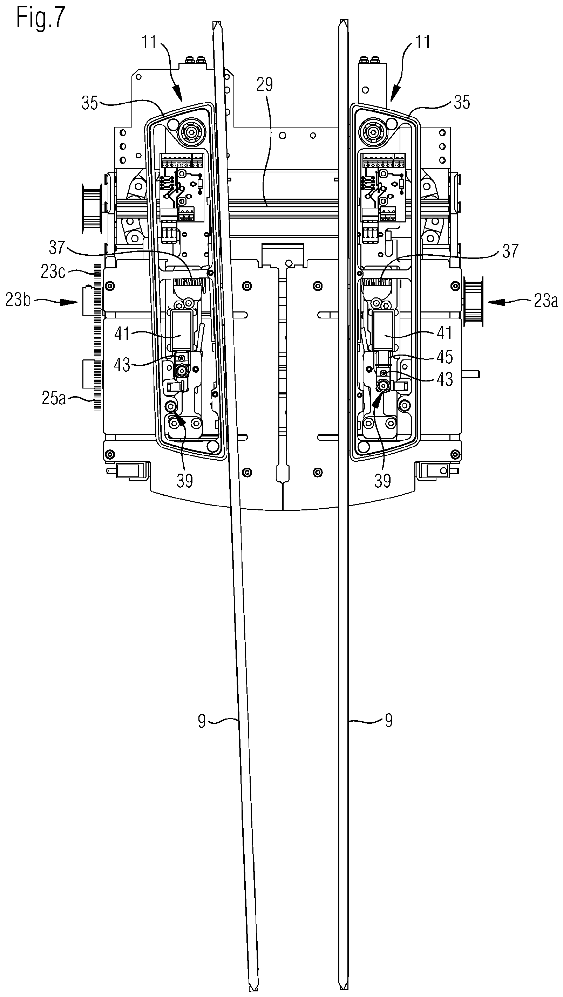

Der Verschwenkmechanismus ist in Figur 7 dargestellt. Figur 7 zeigt eine Draufsicht auf die Antriebsübertragungseinrichtungen 11, mit daran angeordneten Klemmbacken 9. In Figur 7 ist dabei die in Draufsicht linke Klemmbacke 9 in einem verschwenkten Zustand dargestellt und die in Draufsicht auf die Figur 7, rechte Klemmbacke 9, in ihrer Grundposition gezeigt.

Die Klemmbacken 9 sind jeweils an einer Halterung 35 angeordnet. An der Halterung 35 erfolgt auch die translatorische Lagerung der Klemmbacken 9 in Längsrichtung der Klemmbacken 9. Wie aus Figur 7 ersichtlich ist, können die Halterungen 35 jeweils in der horizontalen Ebene verschwenkt werden.

Die Antriebsübertragungseinrichtungen 11 weisen zum Hervorrufen der Verschwenkbewegungen der Halterung 35 und somit der Klemmbacken 9 jeweils eine Federvorrichtung 37 auf, die mittels ihrer Vorspannkraft die jeweilige Halterung 35 aus der Grundposition in die verschwenkte Position drückt. Um die Halterung 35 in der Grundposition zu halten ist eine Arretiervorrichtung 39 vorgesehen. Die Arretiervorrichtung 39 kann über eine Auslösevorrichtung 41 gelöst werden, so dass die Federvorrichtung 37 die Halterung 35 und somit die Klemmbacken 9 in Richtung der Verschwenkposition drücken kann. Die Auslösevorrichtung 41 kann ein Elektromagnet sein. Dieser zieht einen Rückhalter 43 durch Magnetkraft an, so dass die Arretiervorrichtung 39 gelöst wird und die Halterung 35 frei verschwenkbar ist. Das Vorsehen eines Elektromagneten hat den Vorteil, dass lediglich über einen kurzen Zeitraum dieser unter Strom gesetzt werden muss, bis die Arretiervorrichtung 39 gelöst ist. Die Rückführung des Rückhalters 43 zum erneuten Arretieren der Arretiervorrichtung 39 kann über eine Feder 45 erfolgen.

Die Federvorrichtung 37 ist derart ausgelegt, dass bei einem Verfahren der Antriebsübertragungseinrichtungen 11 aufeinander zu, so dass die Klemmbacken 9 einen Gegenstand 200 klemmen, eine ausreichende Klemmkraft der Klemmbacken 9 erzeugt werden kann, ohne dass es zu einer oder einer übermäßigen Einfederung der Federvorrichtung 37 und somit zum Arretieren der Arretiervorrichtung 39 kommen kann. Mit anderen Worten, wenn die Klemmbacken 9 einen zu transportierenden Gegenstand 200 zum Transportieren klemmen, verbleiben die Klemmbacken 9 weitestgehend im verschwenkten Zustand und werden nicht vollständig in Richtung der Grundposition gedrückt. Um die Klemmbacken 9 von der verschwenkten Position in die Grundposition zurückzubewegen, können die Klemmbacken 9 gegeneinander gedrückt werden, so dass entgegen der Vorspannkraft der Federvorrichtung 37 die Klemmbacken in Richtung der Grundposition zurück verschwenkt werden. Beim Erreichen der Grundposition schnappt die Arretiervorrichtung 39 ein und hält die Klemmbacken 9 in der Grundposition. Die notwendige Antriebsenergie für das Verschwenken der Klemmbacken in die Grundposition und der Vorspannung der Federvorrichtung 37 wird mittels des ersten Antriebsmotors 19 bereitgestellt, so dass die Antriebsenergie in der Federvorrichtung zwischengespeichert werden kann.

An den Halterungen 35 können ferner nicht dargestellte Sensoren angeordnet sein, die die eingezogene Endposition der Klemmbacken 9, wie sie in Figur 2 dargestellt ist, oder eine ausgefahrene Position, wie sie beispielsweise in den Figuren 6a, 6b dargestellt ist, registriert. Dazu kann neben einer der Klemmbacken ein Sensor angeordnet sein, der die eingezogene Endposition ermittelt und an der anderen Klemmbacke 9 ein Sensor, der die ausgefahrene Endposition ermittelt. Da die Antriebswelle 29 beide Klemmbacken 9 synchron antreibt, ist es ausreichend, wenn jeweils nur ein Sensor neben einer der Klemmbacken 9 angeordnet ist, so dass durch die synchrone Bewegung sichergestellt ist, dass beim Erreichen einer der Endpositionen einer Klemmbacke 9 die andere Klemmbacke 9 ebenfalls die entsprechende Endposition erreicht hat. Die Sensoren können beispielsweise optische Sensoren sein, die eine Aussparung in der entsprechenden Klemmbacke 9 sensieren.

## Patentansprüche

1. Manipulator (1) für ein Lager (100) mit mindestens einer Lagerfläche (150), auf der Gegenstände (200) in einer Reihe anordenbar sind, wobei über den Manipulator (1) eine Bedienseite (150a) der Lagerfläche (150) bedienbar ist, mit mindestens einem verfahrbaren Tragschlitten (3) mit einer Tragfläche (5) zur Aufnahme der Gegenstände (200), wobei eine Greifvorrichtung (7) mit zwei langgestreckten Klemmbacken (9) an dem Tragschlitten (3) angeordnet ist, wobei die Klemmbacken (9) in eine erste horizontale Richtung (A) aufeinander zu oder voneinander weg zur Anpassung des Abstands der Klemmbacken (9) an einen Gegenstand (200) bewegbar sind und in eine zweite horizontale Richtung (B) auf die Lagerfläche (150) zu oder von dieser weg bewegbar sind, so dass mittels der Klemmbacken (9) mindestens einer der Gegenstände (200) von der Lagerfläche (150) entnehmbar und auf die Tragfläche (5) beförderbar oder von der Tragfläche (5) auf die Lagerfläche (150) beförderbar und auf dieser ablegbar ist, und mit einer Antriebsvorrichtung (10) mit zwei Antriebsübertragungseinrichtungen (11), wobei jeweils eine der Antriebsübertragungseinrichtungen (11) an einer der Klemmbacken (9) angreift und die jeweilige Klemmbacke (9) zum Ausführen der Bewegung in die zweite horizontale Richtung (B) einzeln antreibt, wobei die Antriebsübertragungseinrichtungen (11) jeweils eine Halterung (35) aufweisen, an der jeweils eine der Klemmbacken (9) translatorisch verschiebbar gelagert ist,
**dadurch gekennzeichnet, dass** die Klemmbacken (9) auf der Tragfläche (5) angeordnet sind, und, dass
die Halterungen (35) in einer horizontalen Ebene verschwenkbar sind und wobei über die Verschwenkbewegungen ein Winkel zwischen den Klemmbacken (9) veränderbar ist.

2. Manipulator nach Anspruch 1, **dadurch gekennzeichnet, dass** die Antriebsübertragungseinrichtungen (11) aufeinander zu oder voneinander weg bewegbar sind, wodurch die Antriebsübertragungseinrichtungen (11) die Klemmbacken (9) in die erste horizontale Richtung bewegen.

3. Manipulator nach einem der Ansprüche 1 oder 2, **dadurch gekennzeichnet, dass** die Antriebsvorrichtung (10) einen ersten Antriebsmotor (19) aufweist, der die Antriebsübertragungseinrichtungen (11) aufeinander zu oder voneinander weg antreibt.

4. Manipulator nach Anspruch 3, **dadurch gekennzeichnet, dass** die Antriebsübertragungseinrichtungen (11) jeweils auf oder an einer Gewindespindel (23,25) angeordnet sind, wobei der erste Antriebsmotor (19) die Gewindespindeln (23,25) rotatorisch antreibt, wodurch die jeweilige Antriebsübertragungseinrichtung (11) entlang der entsprechenden Gewindespindel (23,25) bewegbar ist, wobei vorzugsweise die Gewindespindeln (23,25) gegenläufig antreibbar sind, der erste Antriebsmotor (19) eine der Gewindespindeln (23,25) rotatorisch antreibt und die Gewindespindel (23,25) die Antriebsbewegung auf die andere der Gewindespindeln (23,25) überträgt.

5. Manipulator nach einem der Ansprüche 1 bis 4, **dadurch gekennzeichnet, dass** die Antriebsvorrichtung (10) einen zweiten Antriebsmotor (27) aufweist, der mittels der Antriebsübertragungseinrichtungen (11) die Klemmbacken (9) in die zweite horizontale Richtung (B) antreibt.

6. Manipulator nach Anspruch 5, **dadurch gekennzeichnet, dass** die Klemmbacken (9) jeweils eine Zahnstange und die Antriebsübertragungseinrichtungen (11) jeweils ein Ritzel (33) aufweisen, wobei das Ritzel (33) einer Antriebsübertragungseinrichtung (11) in die Zahnstange der entsprechenden Klemmbacke (9) eingreift und die Antriebsbewegung des zweiten Antriebsmotor (27) über das Ritzel (33) auf die jeweilige Klemmbacke (9) übertragbar ist.

7. Manipulator nach Anspruch 6, **dadurch gekennzeichnet, dass** die Antriebsvorrichtung (10) eine Antriebswelle (29) aufweist, wobei die Antriebsübertragungseinrichtungen (11) auf der Antriebswelle (29) translatorisch in Längsrichtung der Antriebswelle (29) beweglich gelagert sind, wobei die Antriebswelle (29) von dem zweiten Antriebsmotor (27) rotatorisch angetrieben ist und die Antriebswelle (29) die Antriebsbewegung des zweiten Antriebsmotors (27) auf die Ritzel (33) überträgt, wobei vorzugsweise die Antriebsübertragungseinrichtungen (11) jeweils einen Zahnriementrieb (31) aufweisen, der die rotatorische Antriebsbewegung der Antriebswelle (29) auf das jeweilige Ritzel (33) überträgt.

8. Manipulator nach einem der Ansprüche 1 bis 7, **dadurch gekennzeichnet, dass** die Antriebsübertragungseinrichtungen (11) jeweils eine Arretiervorrichtung (39) aufweisen, die die jeweilige Halterung (35) in einer Grundposition hält, wobei die Antriebsübertragungseinrichtungen (11) jeweils eine Federvorrichtung (37) aufweisen, die in der Grundposition der Halterungen (35) eine Vorspannkraft mit einer zu der jeweils anderen Klemmbacke (9) gerichteten Kraftkomponente auf die jeweilige Klemmbacke (9) ausüben, wobei die Arretiervorrichtung (39) über eine Auslösevorrichtung (41) lösbar ist, so dass die Federvorrichtung (37) mittels der Vorspannkraft die Halterung (35) verschwenkt, wobei vorzugsweise die Auslösevorrichtung (41) ein Elektromagnet ist.

9. Manipulator nach Anspruch 8, **dadurch gekennzeichnet, dass** durch eine Bewegung der Antriebsübertragungseinrichtungen (11) aufeinander zu die Klemmbacken (9) im verschwenkten Zustand der Halterungen (35) gegen einen Gegenstand oder gegeneinander drückbar sind, wodurch die Federvorrichtung (37) vorspannbar ist und die Halterungen (35) in die Grundposition bewegbar sind.

10. Manipulator nach einem der Ansprüche 1 bis 9, **dadurch gekennzeichnet, dass** zwischen den Klemmbacken (9) ein Schieber (15) angeordnet ist, der in die zweite horizontale Richtung (B) verschiebbar ist.

11. Manipulator nach einem der Ansprüche 1 bis 10, **dadurch gekennzeichnet, dass** neben zumindest einer der Klemmbacken (9) ein Sensor zur Bestimmung der Endpositionen der Klemmbacke (9) bei der Bewegung in die zweite horizontale Richtung (B) angeordnet ist.

12. Manipulator nach Anspruch 11, **dadurch gekennzeichnet, dass** jeweils neben den Klemmbacken (9) ein Sensor angeordnet ist, wobei einer der Sensoren die eingezogene Endposition einer der Klemmbacken (9) ermittelt und der andere Sensor die ausgefahrene Endposition der anderen Klemmbacke (9) ermittelt.

13. Manipulator nach einem der Ansprüche 6 bis 12, **dadurch gekennzeichnet, dass** die Zahnstangen aus einem Kunststoff bestehen.

14. Lager (100) mit mehreren horizontal angeordneten Lagerflächen (150), die jeweils mindestens eine Bedienseite (150a) aufweisen, und mit mindestens einem Manipulator (1) nach einem der Ansprüche 1 bis 13.

## Claims

1. Manipulator (1) for a storage facility (100) with at least one storage surface (150) on which objects (200) can be arranged in a row, wherein an operating side (150a) of the storage surface (150) can be operated via the manipulator (1),
comprising at least one movable supporting slide (3) with a supporting surface (5) for receiving the objects (200), wherein a gripping device (7) with two elongated clamping jaws (9) is arranged on the supporting slide (3), the clamping jaws being movable in a first horizontal direction (A) towards or away from each other for adapting the distance of the clamping jaws (9) to an object (200), and movable in a second horizontal direction (B) towards or away from the storage surface (150), so that by means of the clamping jaws (9) at least one of the objects (200) can be removed from the storage surface (150) and conveyed onto the supporting surface (5) or can be conveyed from the supporting surface (5) onto the storage surface (150) and deposited thereon, and
comprising a drive device (10) with two drive transmission devices (11), wherein in each case one of the drive transmission devices (11) engages one of the clamping jaws (9) and drives the respective clamping jaw (9) individually for carrying out the movement in the second horizontal direction (B), the drive transmission devices (11) each comprising a holder (35) on which, respectively, one of the clamping jaws (9) is mounted so as to be translationally displaceable
**characterized in that**
the clamping jaws (9) are arranged on the supporting surface (5), and
**in that** the holders (35) can be pivoted in a horizontal plane, and wherein an angle between the clamping jaws (9) can be varied via the pivoting movements.

2. Manipulator according to claim 1, **characterized in that** the drive transmission means (11) are movable towards or away from each other, whereby the drive transmission means (11) move the clamping jaws (9) in the first horizontal direction.

3. Manipulator according to any one of claims 1 or 2, **characterized in that** the drive device (10) comprises a first drive motor (19) which drives the drive transmission means (11) towards or away from each other.

4. Manipulator according to claim 3, **characterized in that** the drive transmission devices (11) are each arranged on or at a threaded spindle (23,25), wherein the first drive motor (19) rotationally drives the threaded spindles (23,25), whereby the respective drive transmission device (11) is movable along the corresponding threaded spindle (23,25), wherein, preferably, the threaded spindles (23,25) are adapted to be driven in opposite directions, the first drive motor (19) rotationally drives one of the threaded spindles (23,25) and the threaded spindle (23,25) transmits the drive movement to the other of the threaded spindles (23,25).

5. Manipulator according to any one of claims 1 to 4, **characterized in that** the drive device (10) comprises a second drive motor (27) which drives the clamping jaws (9) in the second horizontal direction (B) by means of the drive transmission means (11).

6. Manipulator according to claim 5, **characterized in that** the clamping jaws (9) each have a toothed rack and the drive transmission devices (11) each have a pinion (33), the pinion (33) of a drive transmission device (11) engaging in the toothed rack of the corresponding clamping jaw (9) and the drive movement of the second drive motor (27) being transmittable to the respective clamping jaw (9) via the pinion (33).

7. Manipulator according to claim 6, **characterized in that** the drive device (10) comprises a drive shaft (29), wherein the drive transmission means (11) are mounted on the drive shaft (29) so as to be movable in translation in the longitudinal direction of the drive shaft (29), wherein the drive shaft (29) is driven in rotation by the second drive motor (27) and the drive shaft (29) transmits the drive movement of the second drive motor (27) to the pinion (33), wherein, preferably, the drive transmission means (11) each comprise a toothed belt drive (31) which transmits the rotational drive movement of the drive shaft (29) to the respective pinion (33).

8. Manipulator according to any one of claims 1 to 7, **characterized in that** the drive transmission means (11) each have a locking device (39) which holds the respective holder (35) in a basic position, the drive transmission devices (11) each having a spring device (37) which, in the home position of the holders (35), exert a prestressing force with a force component directed towards the respective other clamping jaw (9) on the respective clamping jaw (9), the locking device (39) being releasable via a release device (41), so that the spring device (37) pivots the holder (35) by means of the prestressing force, wherein, preferably, the release device (41) is an electromagnet.

9. Manipulator according to claim 8, **characterized in that** by a movement of the drive transmission means (11) towards each other, the clamping jaws (9) in the pivoted state of the holders (35) can be pressed against an object or against each other, whereby the spring device (37) can be pretensioned and the holders (35) can be moved into the home position.

10. Manipulator according to one of the claims 1 to 9, **characterized in that** a slider (15) is arranged between the clamping jaws (9), which is displaceable in the second horizontal direction (B).

11. Manipulator according to any one of claims 1 to 10, **characterized in that** next to at least one of the clamping jaws (9) a sensor is arranged for determining the end positions of the clamping jaw (9) during the movement in the second horizontal direction (B).

12. Manipulator according to claim 11, **characterized in that** a sensor is arranged next to each of the clamping jaws (9), one of the sensors determining the retracted end position of one of the clamping jaws (9) and the other sensor determining the extended end position of the other clamping jaw (9).

13. Manipulator according to any one of claims 6 to 12, **characterized in that** the racks are made of a plastic material.

14. Storage facility (100) having a plurality of horizontally arranged storage surfaces (150), each having at least one operating side (150a), and having at least one manipulator (1) according to any one of claims 1 to 13.

## Revendications

1. Manipulateur (1) pour un entrepôt (100) comportant au moins une surface de stockage (150) sur laquelle des objets (200) peuvent être agencés en une rangée, dans lequel un côté d'actionnement (150a) de la surface de stockage (150) peut être actionné par le manipulateur (1),
comportant au moins un chariot porteur (3) déplaçable comportant une surface porteuse (5) pour accueillir les objets (200), dans lequel un dispositif de préhension (7) comportant deux mâchoires de serrage (9) allongées est agencé sur le chariot porteur (3),
qui sont mobiles dans une première direction horizontale (A) l'une vers l'autre ou à l'écart l'une de l'autre pour adapter la distance des mâchoires de serrage (9) à un objet (200) et sont mobiles dans une seconde direction horizontale (B) sur la surface de stockage (150) vers celle-ci ou à l'écart de celle-ci, de sorte qu'au moyen des mâchoires de serrage (9), au moins l'un des objets (200) peut être retiré de la surface de stockage (150) et transporté sur la surface porteuse (5) ou transporté de la surface porteuse (5) sur la surface de stockage (150) et déposé sur celle-ci, et
comportant un dispositif d'entraînement (10) comportant deux équipements de transmission d'entraînement (11), dans lequel respectivement l'un des équipements de transmission d'entraînement (11) vient en prise avec l'une des mâchoires de serrage (9) et entraîne individuellement la mâchoire de serrage (9) respective pour effectuer le mouvement dans la seconde direction horizontale (B), les équipements de transmission d'entraînement (11) présentent respectivement un support (35) sur lequel respectivement l'une des mâchoires de serrage (9) est montée de manière à pouvoir se déplacer en translation,
**caractérisé en ce que** les mâchoires de serrage (9) sont agencées sur la surface porteuse (5), et **en ce que** les supports (35) peuvent pivoter dans un plan horizontal et dans lequel un angle entre les mâchoires de serrage (9) peut être modifié par les mouvements de pivotement.

2. Manipulateur selon la revendication 1, **caractérisé en ce que** les équipements de transmission d'entraînement (11) peuvent être rapprochés ou éloignés l'un de l'autre, moyennant quoi les équipements de transmission d'entraînement (11) déplacent ainsi les mâchoires de serrage (9) dans la première direction horizontale.

3. Manipulateur selon l'une des revendications 1 ou 2,
**caractérisé en ce que** le dispositif d'entraînement (10) présente un premier moteur d'entraînement (19) qui entraîne les équipements de transmission d'entraînement (11) pour les rapprocher ou les éloigner les uns des autres.

4. Manipulateur selon la revendication 3, **caractérisé en ce que** les équipements de transmission d'entraînement (11) sont agencés respectivement sur ou au niveau d'une broche filetée (23, 25), dans lequel le premier moteur d'entraînement (19) entraîne en rotation les broches filetées (23, 25), moyennant quoi l'équipement de transmission d'entraînement (11) respectif est déplaçable le long de la broche filetée (23, 25) correspondante, dans lequel les broches filetées (23, 25) peuvent de préférence être entraînées en sens inverse, le premier moteur d'entraînement (19) entraîne l'une des broches filetées (23, 25) en rotation et la broche filetée (23, 25) transmet le mouvement d'entraînement à l'autre des broches filetées (23, 25).

5. Manipulateur selon l'une des revendications 1 à 4, **caractérisé en ce que** le dispositif d'entraînement (10) présente un second moteur d'entraînement (27) qui entraîne les mâchoires de serrage (9) dans la seconde direction horizontale (B) au moyen des équipements de transmission d'entraînement (11).

6. Manipulateur selon la revendication 5, **caractérisé en ce que** les mâchoires de serrage (9) présentent respectivement une crémaillère et les équipements de transmission d'entraînement (11) présentent respectivement un pignon (33), dans lequel le pignon (33) d'un équipement de transmission d'entraînement (11) s'engrène dans la crémaillère de la mâchoire de serrage (9) correspondante et le mouvement d'entraînement du second moteur d'entraînement (27) peut être transmis à la mâchoire de serrage (9) respective par l'intermédiaire du pignon (33).

7. Manipulateur selon la revendication 6, **caractérisé en ce que** le dispositif d'entraînement (10) présente un arbre d'entraînement (29), dans lequel les équipements de transmission d'entraînement (11) sont montés sur l'arbre d'entraînement (29) de manière à pouvoir se déplacer en translation dans la direction longitudinale de l'arbre d'entraînement (29), dans lequel l'arbre d'entraînement (29) est entraîné en rotation par le second moteur d'entraînement (27) et l'arbre d'entraînement (29) transmet le mouvement d'entraînement du second moteur d'entraînement (27) aux pignons (33), dans lequel les équipements de transmission d'entraînement (11) présentent de préférence respectivement un entraînement par courroie dentée (31) qui transmet le mouvement d'entraînement en rotation de l'arbre d'entraînement (29) au pignon (33) respectif.

8. Manipulateur selon l'une des revendications 1 à 7, **caractérisé en ce que** les équipements de transmission d'entraînement (11) présentent respectivement un dispositif d'arrêt (39) qui maintient le support (35) respectif dans une position de base, dans lequel les équipements de transmission d'entraînement (11) présentent respectivement un dispositif à ressort (37), qui, dans la position de base des supports (35), exerce une force de précontrainte avec une composante de force dirigée vers l'autre mâchoire de serrage (9) respective sur la mâchoire de serrage (9) respective, dans lequel le dispositif d'arrêt (39) peut être libéré par l'intermédiaire d'un dispositif de libération (41), de sorte que le dispositif à ressort (37) fait pivoter le support (35) au moyen de la force de précontrainte, dans lequel le dispositif de libération (41) est de préférence un électroaimant.

9. Manipulateur selon la revendication 8, **caractérisé en ce que,** par un mouvement des équipements de transmission d'entraînement (11) l'un vers l'autre, les mâchoires de serrage (9) peuvent être pressées contre un objet ou l'une contre l'autre dans l'état pivoté des supports (35), moyennant quoi le dispositif à ressort (37) peut être précontraint et les supports (35) sont déplaçables dans la position de base.

10. Manipulateur selon l'une des revendications 1 à 9,
**caractérisé en ce qu'**un coulisseau (15) est agencé entre les mâchoires de serrage (9) et peut être déplacé dans la seconde direction horizontale (B).

11. Manipulateur selon l'une des revendications 1 à 10,
**caractérisé en ce qu'**un capteur est agencé à côté d'au moins une des mâchoires de serrage (9) pour déterminer les positions finales de la mâchoire de serrage (9) lors du déplacement dans la seconde direction horizontale (B).

12. Manipulateur selon la revendication 11, **caractérisé en ce qu'**un capteur est agencé respectivement à côté des mâchoires de serrage (9), dans lequel l'un des capteurs détermine la position finale rétractée de l'une des mâchoires de serrage (9) et l'autre capteur détermine la position finale déployée de l'autre mâchoire de serrage (9).

13. Manipulateur selon l'une des revendications 6 à 12,
**caractérisé en ce que** les crémaillères sont réalisées en une matière plastique.

14. Entrepôt (100) comportant plusieurs surfaces de stockage (150) agencées horizontalement et présentant chacune au moins un côté d'actionnement (150a), et au moins un manipulateur (1) selon l'une des revendications 1 à 13.
